# EUROPÄISCHE PATENTSCHRIFT

(11) **EP 1 449 715 B1**
(45) Veröffentlichungstag und Bekanntmachung des Hinweises auf die Patenterteilung: **09.09.2009**
(21) Anmeldenummer: 03026701.7
(22) Anmeldetag: 21.11.2003
(51) Int. Cl.: B60N 2/72, A47C 7/30, A47C 23/16, A47C 31/06, B60N 2/70, B60N 2/06

(54) **Fahrzeugsitz für ein Kraftfahrzeug**
Seat for an automotive vehicle
Siège pour un véhicule automobile

(30) Priorität: 19.02.2003 DE 10306920
(43) Veröffentlichungstag der Anmeldung: 25.08.2004
(73) Patentinhaber: Dr. Ing. h.c. F. Porsche Aktiengesellschaft, 70435 Stuttgart (DE)
(72) Erfinder: Mäbert, Siegfried, 73230 Kirchheim (DE); Rehfuss, Benjamin, 73760 Ostfildern (DE)

(56) Entgegenhaltungen:
- DE-A1- 19 927 886
- DE-U1- 9 415 241
- US-A- 3 525 514
- US-A- 3 671 031
- US-A- 4 153 959
- US-A1- 2002 153 759

## Beschreibung

Die Erfindung bezieht sich auf einen Fahrzeugsitz für ein Kraftfahrzeug nach dem Oberbegriff des Anspruchs 1.

Aus der DE 198 49 275 C2 ist eine Befestigungsanordnung für Wellenfedern von Polstermöbeln bekannt, bei der die Federn in Einhängeklips gehalten sind, die mit einem Rahmen verbunden werden.

Desweiteren ist aus der DE 16 54 302 eine Klammer zur Aufnahme eines Federendes bekannt, die mit einer Schicht aus einem geräuschdämpfenden Werkstoff versehen ist.

Aus der DE 199 27 886 A ist ein Fahrzeugsitz mit einem Sitzgestell bekannt, welches Federlagen für ein Sitzpolster aufweist, wobei die Federlagen endseitig auf einer Querwelle gehalten sind.

Des Weiteren ist aus der US 2002/15 37 59 A ein Federrahmen bekannt, welcher endseitig in hakenförmigen Aufnahmen gehalten wird. Die hakenförmigen Aufnahmen weisen ein geräuschisolierendes Material auf, in das die Enden des Federrahmens eingebettet gehalten sind.

Ferner ist aus der DE 94 15 241 ein Metallrohrrahmen für einen Sitz mit eingespannten Wellenfedern bekannt, wobei die Wellenfedern endseitig in einer hakenförmigen Aufnahme gehalten werden, die eine Beschichtung bzw. Kappen aus Kunststoff, Gummi oder dgl. Material aufweisen, welches eine Geräuschvermeidung bewirkt.

Des Weiteren ist aus dem US 3 525 514 A eine Wellenfederanordnung für einen Sitz bekannt, wobei die Enden der Wellenfedern in einer Halterung eingehakt gehalten werden.

Die Enden der Wellenfedern können auch elastisch in Federelementen gelagert sein, die mit dem Sitzrahmen verbunden sind.

Die Aufgabe der Erfindung besteht darin, einen Fahrzeugsitz mit Federelementen zu schaffen, der einen verbesserten Sitzkomfort im Fahrzustand des Kraftfahrzeugs hinsichtlich einer Schwingungsisolation gewährleistet. Darüber hinaus muß eine einfache Montage sowie Geräuschfreiheit gewährleistet sein.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß durch die Einbettung der freien - in Bezug auf die Fahrtrichtung - vorderen freien Stegenden der Federelemente des Fahrzeugsitzes eine solche Schwingungsisolation gegenüber dem Fahrzeug bzw. dem Fahrzeugaufbau erzielt wird, daß weniger störende Schwingungsanteile in den Sitz eingeleitet werden und eine Erhöhung des Sitzkomforts gegenüber bekannten Fahrzeugsitzen erzielbar ist. Dies wird im wesentlichen dadurch erreicht, daß die Federelemente jeweils mit ihren - in Fahrtrichtung gesehene - vorderen freien Stegenden unter Zwischenschaltung eines elastischen Elements schwingungsisoliert an der Sitzschale gehalten und die hinteren freien Stegenden in einer Blechlasche des Sitzquerträgers angeordnet sind.

Desweiteren sind die elastischen Elemente jeweils in einer halbkreisförmig ausgerundeten Aufnahme eines Blechschalenelements angeordnet, welches in die Kissenschale der Sitzstruktur eingeschoben werden kann. Das Blechschalenelement weist eine - in Fahrtrichtung gesehen - vorliegende Öffnung zur Aufnahme des freien Stegendes des Federelements auf und dieses Stegende ist mit einem Maß a in einer horizontalen Ebene beabstandet zur Wandung der Aufnahme angeordnet. Durch diese Ausbildung und Anordnung des Blechschalenelements wird in vorteilhafter Weise erreicht, daß eine einfache Montage in das Blechschalenelement erzielt wird, zumal das freie Stegende des Federelements jeweils in einem in das elastische Element eingebetteten Hülsenteil gehalten ist und dieses zur radialen Aufnahme des freien Stegendes aufgetrennt ist. Durch die Öffnung des Blechschalenelements kann das freie Stegende des Federelements einfach montiert werden. Durch die Lagerung in der Hülse wird nur eine minimierte Flächenpressung auf das elastische Element ausgeübt, um die Dauerhaltbarkeit der Konstruktion zu verbessern.

Eine Verbindung des Blechschalenelements mit der Sitzschale erfolgt in vorteilhafter Weise dadurch, daß an mindestens einer Längsseite des Blechschalenelements zueinander beabstandete Aufnahmen und dazwischen angeordnete Einhaklaschen für Schlitze in der Sitzschale vorgesehen sind und weitere Einhaklaschen auf einer gegenüberliegenden Seite des Blechschalenelements liegen, die in weiteren Schlitzen gehalten sind. Hierdurch wird eine vereinfachte Montageweise des Blechschalenelements an der Sitzschale erzielt, in dem die Einhaklaschen in die Schlitze einhängbar sind.

Damit das elastische Element in der halbkreisförmigen Aufnahme arretiert gehalten wird, ist in der Wandung der halbkreisförmigen Aufnahme eine Quersicke vorgesehen, die in eine mit dieser korrespondierenden Quernut des elastischen Elements hineinragt.

Insbesondere besteht das elastische Element aus einem Gummiteil, in das das freie Stegende des Federelements mit einem in der horizontalen Ebene größeren Abstand gehalten ist als in einer vertikalen Ebene mit einem kleineren Abstand.

Durch diese Anordnung des freien Stegendes sowie der Einbettung über die Hülse in das elastische Element wird eine Schwingungsisolation, eine Geräuschminimierung, eine Erhöhung des Sitzkomforts, insbesondere auf langen Strecken, sowie eine Verbesserung der Übertragungsfunktion auch im höherfrequenten Bereich etwa ab 25 Hz erreicht.

Ein Ausführungsbeispiel der Erfindung ist in den Zeichnungen dargestellt und wird im folgenden näher beschrieben.

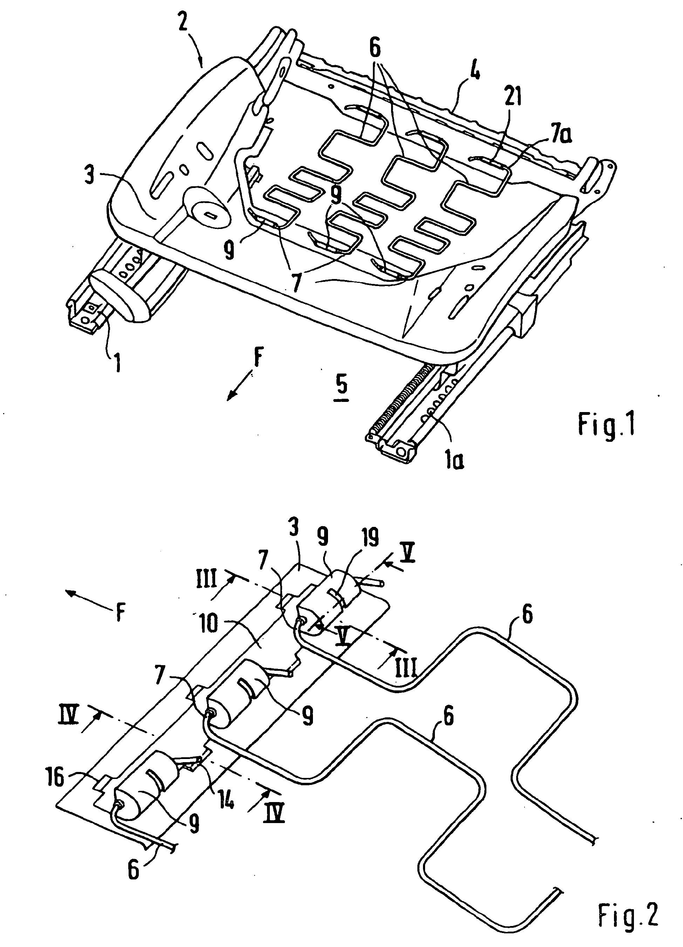

Es zeigen
- Fig. 1: eine schaubildliche Darstellung auf ein Sitzuntergestell, bestehend aus einer vorderen Sitzschale, einem hinteren Sitzquerträger und dazwischen angeordneten Federelementen,
- Fig. 2: eine Schrägansicht auf ein Blechschalenelement unter Zwischenschaltung von in elastischen Elementen gehaltenen Federelementen,

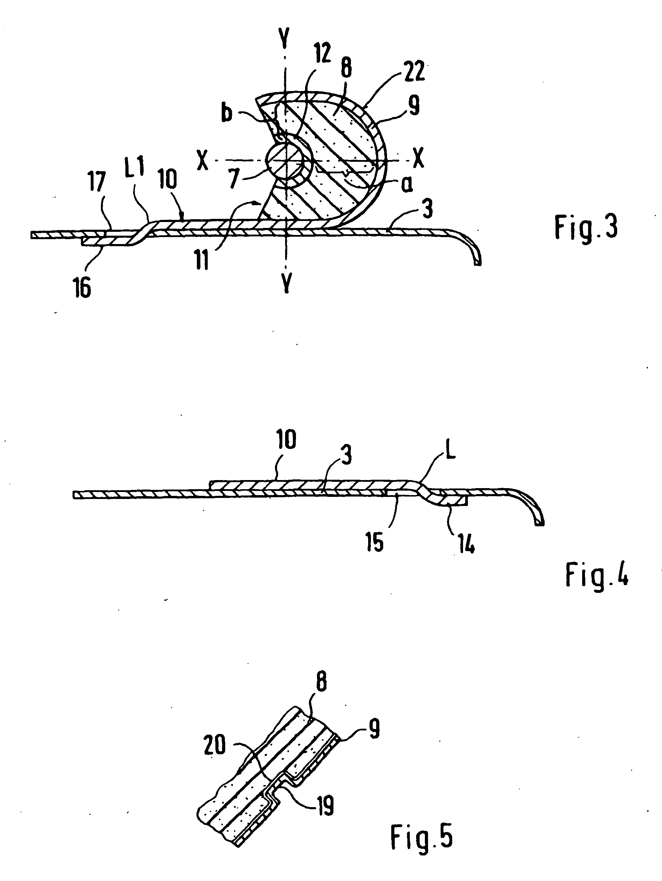

- Fig. 3: einen Schnitt nach der Linie III-III der Fig. 2,
- Fig. 4: einen Schnitt nach der Linie IV-IV der Fig. 2 und
- Fig. 5: einen Schnitt nach der Linie V-V der Fig. 2 durch die Aufnahme mit innenliegend angeordnetem elastischen Element.

Ein Fahrzeugsitz weist ein in Schienen 1, 1a geführtes Sitzuntergestell 2 auf, das im wesentlichen aus einer vorderen Sitzschale 3 und einen mit diesem verbundenen, hinteren Sitzquerträger 4 besteht. Zwischen der Sitzschale 3 und dem Sitzquerträger 4 sind Federelemente 6, beispielsweise mäanderförmige Federn angeordnet. Die Sitzschienen 1, 1a sind mit einem Boden 5 einer Aufbaustruktur des Fahrzeugs verbunden.

Die Federelemente 6 erstrecken sich in Längsrichtung des Sitzes bzw. des Fahrzeugs und sind mit ihren - in Fahrtrichtung F gesehenen - vorderen freien Stegenden 7 unter Zwischenschaltung eines elastischen Elements 8, beispielsweise eines Gummielements, an der Sitzschale 3 in einer halbkreisförmigen Aufnahme 9 eines Blechschalenelements 10 gehalten. Die weiteren - in Fahrtrichtung F gesehenen - hinteren freien Stegenden 7a der Federelemente 6 sind in Blechlaschen 21 des Sitzquerträgers 4 gehalten.

Dieses Blechschalenelement 10 weist eine - in Fahrtrichtung F gesehen - vornliegende Öffnung 11 auf, bis zu der sich das elastische Element 8 erstreckt, in dem das Stegende 7 des Federelements 6 teilweise freiliegend in einem Hülsenteil 12 gelagert ist. Das Hülsenteil 12 ist hierzu in Längsrichtung soweit aufgetrennt, daß das Stegende 7 teilweise von dem Hülsenteil 12 umgriffen und gehalten wird.

An mindestens einer Längsseite L des Blechschalenelements 10 sind die zueinander beabstandeten Aufnahmen 9 für die freien Stegenden 7 des Federelements 6 angeordnet. Zwischen diesen Aufnahmen 9 sind sogenannte Einhaklaschen 14 am Blechschalenelement 10 vorgesehen, die in entsprechende Schlitze 15 der Sitzschale 3 einführbar sind. Desweiteren sind an der gegenüberliegenden Längsseite L1 weitere Einhaklaschen 16 vorgesehen, die ebenfalls in entsprechende Schlitze 17 der Sitzschale 3 einsteckbar sind. Diese Einstecklaschen 16 sind gegenüberliegend die Aufnahmen 9 vorgesehen.

Damit ein fester Sitz des elastischen Elements 8 in der halbkreisförmigen Aufnahme 9 gewährleistet ist, weist diese eine Quersicke 19 auf, die sich über einen Teilumfang der Aufnahme 9 erstreckt und in eine Nut 20 des elastischen Elements 8 hineinragt und dieses in der Aufnahme 9 in Lage hält.

Damit eine optimale Schwingungsisolation der Sitzfederung erzielt werden kann, ist die Dicke des elastischen Elements 8 in einer horizontalen Ebene X-X mit dem Maß a größer als das Maß b in einer vertikalen Ebene Y-Y. Bei dieser Ausführung der Isolation wird ein Gummielement beispielsweisemit einer Härte von 70 Shore verwendet. Denkbar sind auch andere Werkstoffe.

## Patentansprüche

1. Fahrzeugsitz für ein Kraftfahrzeug mit einem Sitzrahmen, der eine - in Fahrtrichtung (F) gesehen - vordere Sitzschale (3) sowie einen mit dieser verbundenen, hinteren Sitzquerträger (4) umfasst und zwischen der Sitzschale (3) und dem Träger (4) Federelemente (6) angeordnet sind, und die Federelemente (6) jeweils mit ihren - in Fahrtrichtung (F) gesehen - vorderen freien Stegenden (7) unter Zwischenschaltung eines elastischen Elements (8) schwingungsisoliert an der Sitzschale (3) gehalten und die hinteren freien Stegenden (7a) am Sitzquerträgers (4) gehalten sind, **dadurch gekennzeichnet, dass** an mindestens einer Längsseite (L) eines Blechschalenelements (10) des Sitzschale (3) zueinander beabstandete Aufnahmen (9) für die elastischen Elemente (8) zur Lagerung der Federelemente (6) angeordnet sind und zwischen den Aufnahmen (9) Einhaklaschen (14) für Schlitze (15) in der Sitzschale (3) vorgesehen sind und weitere Einhaklaschen (16) auf einer gegenüberliegenden Längsseite (L1) des Blechschalenelements (10) angeordnet sind, die in weiteren Schlitzen (17) der Sitzschale (3) gehalten werden.

2. Fahrzeugsitz nach Anspruch 1, **dadurch gekennzeichnet, dass** die elastischen Elemente (8) jeweils in einer halbkreisförmig ausgerundeten Aufnahme (9) des Blechschalenelements (10) angeordnet sind, welches mit der Sitzschale (3) über die Laschen (14,16) verbindbar ist.

3. Fahrzeugsitz nach den Ansprüchen 1 oder 2, **dadurch gekennzeichnet, dass** das Blechschalenelement (10) eine - in Fahrtrichtung (F) gesehen - vorn liegende Öffnung (11) zur Aufnahme eines freien Stegendes (7) des Federelements (6) aufweist und dieses Stegende (7) mit einem Maß (a) in einer horizontalen Ebene (X-X) beabstandet zur Wandung (22) der Aufnahme (9) angeordnet ist.

4. Fahrzeugsitz nach Anspruch 3, **dadurch gekennzeichnet, dass** die freien Stegenden (7) der Federelemente (6) jeweils in einem in das elastische Element (8) eingebetteten Hülsenteil (12) gehalten sind und diese zur radialen Aufnahme der freien Stegenden (7) aufgetrennt sind.

5. Fahrzeugsitz nach einem der vorhergehenden Ansprüche, **dadurch gekennzeichnet, dass** in der Wandung (22) der halbkreisförmigen Aufnahme (9) eine Quersicke (19) vorgesehen ist, die in eine mit dieser korrespondierenden Quernut (20) des elastischen Elements (8) hineinragt.

6. Fahrzeugsitz nach einem der vorhergehenden Ansprüche, **dadurch gekennzeichnet, dass** das elastische Element (8) aus einem Gummiteil besteht, in das das freie Stegende (7) des Federelements (6) mit einem in der horizontalen Ebene (X-X) vorgesehenen größeren Maß (a) gehalten ist als in einer vertikalen Ebene (Y-Y) mit dem kleineren Maß (b).

## Claims

1. Vehicle seat for a motor vehicle, with a seat frame which comprises a front seat shell (3) - as seen in the direction of travel (F) - and a rear seat cross member (4) connected to said seat shell, and spring elements (6) are arranged between the seat shell (3) and the member (4), and the spring elements (6) are each held by their front free web ends (7) - as seen in the direction of travel (F) - on the seat shell (3) in a manner isolated against vibration with the interconnection of an elastic element (8), and the rear free web ends (7a) are held on the seat cross member (4), **characterized in that** receptacles (9) for the elastic elements (8) for the mounting of the spring elements (6) are spaced apart from one another on at least one longitudinal side (L) of a sheet-metal shell element (10) of the seat shell (3), and hook-in tabs (14) are provided between the receptacles (9) for slots (15) in the seat shell (3), and further hook-in tabs (16) are arranged on an opposite longitudinal side (L1) of the sheet-metal shell element (10), said hook-in tabs being held in further slots (17) of the seat shell (3).

2. Vehicle seat according to Claim 1, **characterized in that** the elastic elements (8) are each arranged in a semicircular receptacle (9) of the sheet-metal shell element (10) which can be connected to the seat shell (3) via the tabs (14, 16).

3. Vehicle seat according to either of Claims 1 and 2, **characterized in that** the sheet-metal shell element (10) has an opening (11) situated at the front - as seen in the direction of travel (F) - for receiving a free web end (7) of the spring element (6), and said web end (7) is arranged with a dimension (a) in a horizontal plane (X-X) at a distance from the wall (22) of the receptacle (9).

4. Vehicle seat according to Claim 3, **characterized in that** the free web ends (7) of the spring elements (6) are each held in a sleeve part (12) embedded in the elastic element (8), and said sleeve part is separated in order to radially receive the free web ends (7).

5. Vehicle seat according to one of the preceding claims, **characterized in that** a transverse bead (19) is provided in the wall (22) of the semicircular receptacle (9) and projects into a mutually corresponding transverse groove (20) of the elastic element (8).

6. Vehicle seat according to one of the preceding claims, **characterized in that** the elastic element (8) comprises a rubber part in which the free web end (7) of the spring element (6) is held with a greater dimension (a) in the horizontal plane (X-X) than with the smaller dimension (b) in a vertical plane (Y-Y).

## Revendications

1. Siège de véhicule pour un véhicule automobile comprenant un cadre de siège, qui présente une coque de siège avant (3) - vue dans la direction de conduite (F) - ainsi qu'un support transversal arrière de siège (4) connecté à celle-ci, des éléments de ressort (6) étant disposés entre la coque de siège (3) et le support (4), et les éléments de ressort (6) étant maintenus sur la coque de siège (3) de manière isolant les vibrations, à chaque fois avec leurs extrémités de bout avant libres (7) - vues dans la direction de conduite (F) - en interposant un élément élastique (8) et les extrémités de bout arrière libres (7a) étant maintenues sur le support de siège (4), **caractérisé en ce que**, sur au moins un côté longitudinal (L) d'un élément de coque en tôle (10) de la coque de siège (3) sont prévus des logements (9) espacés l'un de l'autre pour les éléments élastiques (8) pour supporter les éléments à ressort (6), et entre les logements (9) sont prévues des pattes d'accrochage (14) pour des fentes (15) dans la coque de siège (3) et d'autres pattes d'accrochage (16) sont disposés sur un côté longitudinal opposé (L1) de l'élément de coque en tôle (10), lesquels sont maintenus dans d'autres fentes (17) de la coque de siège (3).

2. Siège de véhicule selon la revendication 1, **caractérisé en ce que** les éléments élastiques (8) sont disposés à chaque fois dans un logement (9) arrondi en forme de demi-cercle de l'élément de coque en tôle (10), lequel peut être connecté à la coque de siège (3) par le biais des pattes (14, 16).

3. Siège de véhicule selon les revendications 1 ou 2, **caractérisé en ce que** l'élément de coque en tôle (10) présente une ouverture (11) située en avant - vue dans la direction de conduite (F) - pour recevoir une extrémité de bout libre (7) de l'élément de ressort (6) et cette extrémité de bout (7) est disposée avec une dimension (a) dans un plan horizontal (X-X) à distance de la paroi (22) du logement (9).

4. Siège de véhicule selon la revendication 3, **caractérisé en ce que** les extrémités de bout libres (7) des éléments de ressort (6) sont maintenues à chaque fois dans une partie de douille (12) encastrée dans l'élément élastique (8) et ladite partie de douille est séparée pour recevoir radialement les extrémités de bout libres (7).

5. Siège de véhicule selon l'une quelconque des revendications précédentes, **caractérisé en ce qu'**une moulure transversale (19) est prévue dans la paroi (22) du logement (9) en forme de demi-cercle, et pénètre dans une rainure transversale (20) correspondant à celle-ci de l'élément élastique (8).

6. Siège de véhicule selon l'une quelconque des revendications précédentes, **caractérisé en ce que** l'élément élastique (8) se compose d'une partie en caoutchouc dans laquelle l'extrémité de bout libre (7) de l'élément de ressort (6) est maintenue avec une dimension (a) plus grande prévue dans le plan horizontal (X-X) que dans un plan vertical (Y-Y) ayant la plus petite dimension (b).
